Europäisches Patentamt

European Patent Office

Office européen des brevets

(19)

(11) Publication number: **0 234 805**
**B1**

(12) **EUROPEAN PATENT SPECIFICATION**

(45) Date of publication of the patent specification:
25.04.90

(51) Int. Cl.⁴: **B23K 26/00, B31B 1/90**

(21) Application number: 87301169.6

(22) Date of filing: 11.02.87

(54) A method and a device for forming weakened areas in blanks for containers.

(30) Priority: 20.02.86 NO 860644

(43) Date of publication of application:
02.09.87 Bulletin 87/36

(45) Publication of the grant of the patent:
25.04.90 Bulletin 90/17

(84) Designated Contracting States:
AT BE CH DE ES FR GB GR IT LI NL SE

(56) References cited:
EP-A- 0 101 016
US-A- 4 507 535
US-A- 4 549 063

(73) Proprietor: Elopak A/S, N-3430 Spikkestad(NO)

(72) Inventor: Dyre-Hansen, Hans, Nedre Gleinasen 1,
N-3430 Royken(NO)
Inventor: Thorstensen, Bernt, Sarabratvelen 9D,
N-0687 Oslo 6(NO)

(74) Representative: Cline, Roger Ledlie et al, EDWARD
EVANS & CO. Chancery House 53-64 Chancery Lane,
London WC2A 1SD(GB)

ACTORUM AG

## Description

The present invention relates to a method and a device for selective weakening of limited areas in a web of material for containers for liquids, especially beverages, when the material for said containers is built up from several layers at least one of which is a metal film.

In containers for beverages it is often desired to provide a weakened area in the container, which weakened area is intended for penetration, e.g. by a straw. In case of mass production of such containers it is relatively complicated to form such weakened areas, relatively strict demands being made on such areas. The weakened area must not become leaky during storage and transport, and at the same time penetration must be possible without too much force being exerted.

The build-up of the wall surfaces of such containers is, conventionally, made from a blank of cardboard that is covered with thermoplastic, e.g. polyethylene, on both sides. Additionally, an aluminium film layer is provided on the inner surface, and said aluminium film is covered with another plastic layer, e.g. of polyethylene.

When forming the weakened area for penetration it is important that all these layers are not destroyed, and usually, only the outer polyethylene layer, and the cardboard layer are provided with a hole, whereas the metal film layer, and both inner plastic layers remain intact. The method most used to day is that a hole is bored by a drill from outside, in which case is is important to be able to control said drill with precision to avoid damaging the inner layer. This requires very accurate control and very accurate dimension monitoring of the layers in the container wall. Said drilling method is, thus, relatively sensitive to errors.

Another possibility is to provide weakening by melting away the upper layer, but the results are not very satisfactory. Both mentioned known methods also require a certain period of time and will, thus, delay the production process.

A laser has been proposed for cutting outer layers of a laminate, in US-A 4 549 063. In this apparatus, the laminate passes over a cylindrical roller support and the laser beam is directed towards the laminate from the side remote from the support.

US-A 4 507 535 discloses a laser within a cylinder for cutting perforations in a web supported on the cylinder, but the laser is directed radially of the cylinder.

The present invention provides, in one aspect, a method for selective weakening of limited areas of a material as set out in claim 1. The invention provides in another aspect a device for selective weakening of limited areas of a material as set out in claim 3.

By using a laser beam that is directed into a continuously rotating drum, and by controlling the speed of rotation and the sector where said beam influences said web, it is possible to achieve quite exact conditions both of placing a weakened area, and of the depth of said weakening, at the same time as this may be carried out with continuous feed of said web with high speed.

The invention is now disclosed in more detail with reference to an embodiment shown in the drawing, which diagrammatically shows:

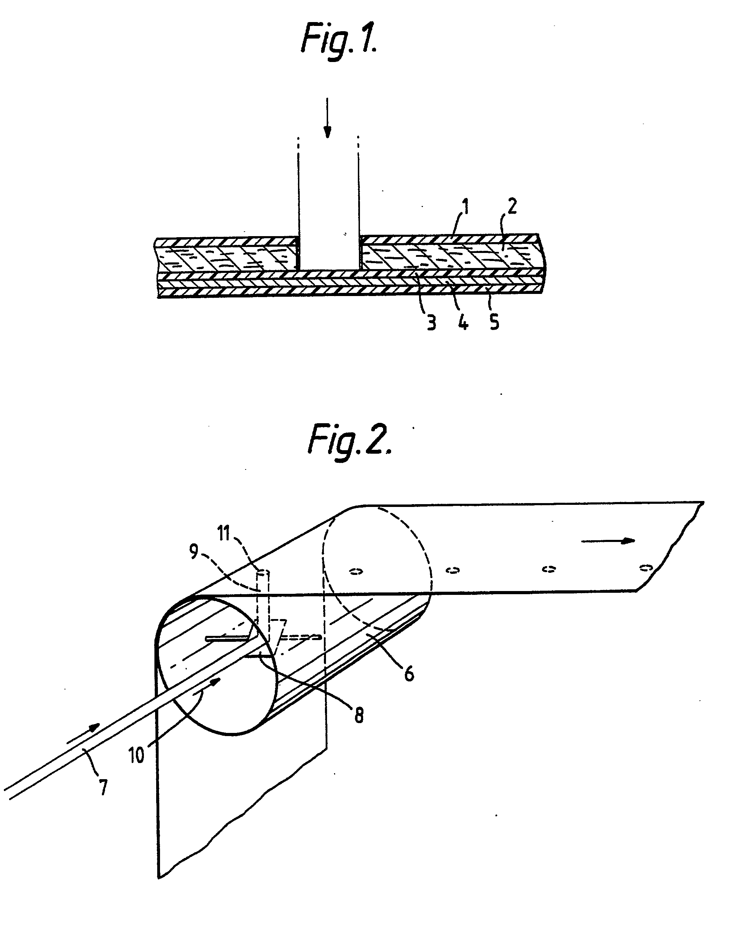

Figure 1 a sectional view of a web of material for a container, with the penetration depth of a laser beam indicated, and

Figure 2 an elevational view in perspective illustrating the principle of the performance of a device according to the invention.

The web of material indended for production of containers for beverages, and which is to be provided with weakened areas which, in the finished containers, e.g. are to be situated in the top surface area of said container, is of a known kind and, e.g. comprises five layers, as shown in Figure I. A cardboard layer 2 is covered on the outside by a thermoplastic, e.g. polyethylene I, and is on the inside provided with an additional thermoplastic layer 3, an aluminium film 4, and an innermost thermoplastic layer 5. A web of a material showing said composition is fed over a conveying cylinder to not shown working stations where said web is divided into the desired dimensions for production of said container. The web is fed over cylinder 6 with a speed that may, e.g. be determined by the finishing speed at the subsequent working stations. Cylinder 6 is a hollow cylinder, and may, if desired, be a driven cylinder. In the direction of rotation of said cylinder a laser beam emitter, not shown in the drawing, is provided and emits a laser beam 7 in the axial direction into said cylinder. In said cylinder a mirror 8 is secured in a manner not specified in detail at a distance from periphery of the cylinder corresponding to the area on the supplied web where it is desirable to provide a weakened area. Said mirror 8 is provided at an angle, e.g. of 45°, relative to the incident laser beam 7 and will, thus, reflect said beam as indicated by 9, directly towards said rotating cylinder wall. Being secured to the cylinder said mirror 8 will rotate with it, and the laser beam will, thus, circulate along a path I0 with said cylinder. In the projection of beam 9 a hole 11 is provided in the cylinder wall with dimensions corresponding to the desired weakened area. In case of suction straw openings it is a question of circular holes having a diameter of 5-6 mm.

By rotating said cylinder and supplying said web of material, and by emitting a continuous laser beam 7 said beam will be continuously reflected by mirror 8, as shown at 9, and will hit the hole II in said cylinder, and from this place it will influence said web. Every time said hole in cylinder 6 is in contact with said web, the web is influenced by the laser beam until hole II again moves away from said web of material due to rotation, whereas said web is fed straight on, as shown in the drawing. The penetration depth of said laser beam into the web can be very accurately adjusted here by adjustment of the intensity of the laser beam and length/period of contact between laser beam and web. Said length/period of contact can be adjusted, either by adjustment of the feeding speed, or by adjustment of length of contact between web and cylinder, since the contact area need not necessarily equal a quarter of a cylinder circumference as shown in the drawing.

In order to simplify the possibilities of adjusting said time/length of contact, furthermore, a covering screen may be provided inside said cylinder with an adjustable sector slot or a hole limiting the distance of influence of said laser beam on the web. Such a covering screen, that is not shown in the drawing, may be exchangeable or adjustable. In this manner it is possible to achieve penetration of said laser beam exactly through cardboard layer 2, without said beam touching the thermoplastic layer 3, which is an ideal condition. At the same time this process can be carried out with relatively high speed.

It is also possible to use a number of mirrors for forming a number of holes or weakened areas, and the deflection of said laser beam may also be modified. For example, the mirror may be turned over a partial sector of the cylinder surface in order to extend the area of influence of the laser beam on the web.

## Claims

1. A method for selective weakening of limited areas of a material intended for the production of containers for liquids wherein the material of the containers is made from a number of layers (1–5) of which at least one layer is a metal film (4), and is supplied over a rotating cylinder (6), with the metal film (4) being a layer remote from the cylinder (6) such that at least one non-metallic layer is interposed between the cylinder (6) and the metal film, and a laser beam (7) is emitted to perform the weakening, characterised in that the laser beam is emitted along the axis of rotation of said cylinder (6) into the cylinder, towards a fixed mirror (8) rotating with said cylinder, and that said beam is reflected by said mirror towards a hole (11) of desired size and shape in the cylinder wall, the rotational speed and/or length of contact between cylinder and web of material being controlled so that a hole defined as to dimensions and depth is melted from outside by the aid of the laser beam hitting said layers with such an intensity and during such a period of time that only the desired thickness of layer is melted through.

2. A method as claimed in claim 1, characterised in the laser beam (7) is emitted axially and centrally into said cylinder (6) towards the mirror (8) which is turned over a partial sector of the cylinder surface.

3. A device for selective weakening of limited areas of a multi-layer material intended for the production of containers for liquids, the multi-layer material comprising at least one metal film, the device comprising a rotatable hollow cylinder (6) for supporting the multi-layer material, and a laser beam (7) emitter characterised in that the laser beam (7) emitter is arranged to emit a laser beam (7) along the axis of rotation of said cylinder, the device further comprising a mirror (8) fixed inside said cylinder (6) on the axis of rotation of said cylinder for rotation therewith, and provided at an angle to reflect said beam towards the inner surface of said cylinder, and that said cylinder surface is provided with one or a number of through windows (11) having a size corresponding to the desired weakened area.

4. A device a claimed in claim 3, characterised in that an adjustable covering screen with a fixed or adjustable sector slot for the laser beam is provided on the interior cylinder wall.

5. A device as claimed in claim 3 or claim 4, characterised in that more than one mirror means (8) is provided inside said cylinder.

## Patentansprüche

1. Verfahren zum selektiven Schwächen von begrenzten Flächen eines Materials, welches bestimmt ist zur Herstellung von Behältern für Flüssigkeiten, wobei das Material der Behälter aus einer Anzahl von Schichten (1–5) hergestellt ist, von denen zumindest eine Schicht ein Metallfilm (4) ist, und wobei das Material über einen rotierenden Zylinder (6) zugeführt wird, wobei der Metallfilm (4) eine Schicht entfernt von dem Zylinder (6) derart ist, daß wenigstens eine nicht-metallische Schicht zwischen dem Zylinder (6) und dem Metallfilm angeordnet ist, und wobei ein Laserstrahl (7) abgestrahlt wird, um die Schwächung auszuführen, dadurch gekennzeichnet, daß der Laserstrahl entlang der Rotationsachse des Zylinders (6) in den Zylinder emittiert wird, und zwar in Richtung auf einen fixierten Spiegel (8), der sich mit dem Zylinder dreht, und daß der Strahl von dem Spiegel in Richtung auf ein Loch (11) gewünschter Größe und Form in der Zylinderwand reflektiert wird, wobei die Rotationsgeschwindigkeit und/oder die Berührungslänge zwischen Zylinder und der Bahn des Materials derart gesteuert wird, daß ein bezüglich seiner Abmessungen und Tiefe definiertes Loch von außen mit Hilfe des Laserstrahls geschmolzen wird, der die Schichten mit einer solchen Intensität und über eine solche Zeitspanne trifft, daß nur die gewünschte Dicke der Schicht durchgeschmolzen wird.

2. Verfahren nach Anspruch 1, dadurch gekennzeichnet, daß der Laserstrahl (7) axial und zentral in den Zylinder (6) in Richtung auf den Spiegel (8) emittiert wird, welcher über einen Teilabschnitt der Zylinderfläche gedreht wird.

3. Vorrichtung zum selektiven Schwächen von begrenzten Bereichen eines mehrschichtigen Materials, welches für die Herstellung von Behältern für Flüssigkeiten bestimmt ist, wobei das mehrschichtige Material zumindest einen Metallfilm aufweist, wobei die Vorrichtung einen rotierbaren Hohlzylinder (6) zum Zuführen des mehrschichtigen Materials und einen Laserstrahl (7) Emitter aufweist, dadurch gekennzeichnet, daß der Laserstrahl (7) Emitter angeordnet ist, um einen Laserstrahl (7) entlang der Rotationsachse des Zylinders zu emittieren, daß die Vorrichtung weiterhin aufweist einen Spiegel (8), der im Inneren des Zylinders (6) auf der Rotationsachse des Zylinders zur Rotation mit diesem fixiert und in einem Winkel vorgesehen ist, um den Strahl in Richtung auf die innere Fläche des Zylinders zu lenken, und daß die Zylinderfläche mit einem oder einer Anzahl von Durchgangsfenstern (11) versehen ist, die eine Größe entsprechend dem gewünschten geschwächten Bereich haben.

4. Vorrichtung nach Anspruch 3, dadurch gekennzeichnet, daß für den Laserstrahl auf der inneren Zylinderwand ein einstellbarer Abdeckungsschirm mit einem fixierten oder einstellbaren Sektorschlitz vorgesehen ist.

5. Vorrichtung nach Anspruch 3 oder 4, dadurch gekennzeichnet, daß mehr als eine Spiegeleinrichtung (8) im Inneren des Zylinders vorgesehen ist.

**Revendications**

1. Un procédé pour l'affaiblissement sélectif de zone limitées d'une matière prévue pour la production de récipient pour des liquides, dans lequel la matière des récipients est constitué à partir d'un certain nombre de couches (1 à 5) dont au moins une couche est un film métallique (4), et qui fourni sur un cylindre en rotation (6), le film métallique (4) étant une couche éloignée du cylindre (6) de telle façon qu'au moins une couche non métallique soit interposée entre le cylindre (6) et le film métallique, et un faisceau laser (7) est émis pour effectuer l'affaiblissement, caractérisé en ce que le faisceau laser est émis le long de l'axe de rotation dudit cylindre (6) dans le cylindre, vers un miroir fixe (8) tournant avec ledit cylindre, et en ce que ledit faisceau est réfléchi par ledit miroir vers un trou (11) de dimension et de forme désirées formé dans la paroi de cylindre, la vitesse de rotation et/ou la longueur de contact entre le cylindre et la bande de matière étant commandées de façon qu'un trou défini en dimension et en profondeur est fondu depuis l'extèrieur à l'aide du faisceau laser heurtant lesdites couches avec une intensité telle et durant une période de temps telle que seule l'épaisseur de couche désirée est fondue.

2. Un procédé tel que revendiqué dans la revendication 1, caractérisé en ce que le faisceau laser (7) est émis axialement et de manière centrale dans ledit cylindre (6) vers le miroir (8) qui est tourné sur un secteur partiel de la surface du cylindre.

3. Un dispositif pour l'affaiblissement sélectif de zones limitées d'une matière à couches multiples prévue pour la production de récipients destinés à des liquides, la matière à couches multiple comprenant au moins un film métallique, le dispositif comprenant un cylindre creux (6) pouvant tourner pour supporter la matière à couches multiple, et un émetteur de faisceau laser (7) caractérisé en ce que l'émetteur de faisceau laser (7) est prévu pour émettre un faisceau laser (7) le long de l'axe de rotation dudit cylindre, le dispositif comprenant en outre un miroir (8) fixé à l'intérieur dudit cylindre (6) sur l'axe de rotation dudit cylindre pour tourner avec celui-ci, et est prévu selon un angle pour réflechir ledit faisceau vers la surface interne dudit cylindre, et en ce que ladite surface de cylindre présente une fenêtre ou un certain nombre de fenêtres de traversée (11) ayant une dimension correspondant à la zone de moindre résistance désirée.

4. Un dispositif tel que revendiqué dans la revendication 3, caractérisé en ce qu'un écran de recouvrement réglable comportant une fente de secteur fixe ou réglable pour le faisceau laser est prévu sur la paroi inférieure du cylindre.

5. Un dispositif tel que revendiqué dans la revendication 3 ou 4, caractérisé en ce que plus d'un moyen à miroir (8) est prévu à l'intérieur dudit cylindre.

## Fig.1.

## Fig.2.